# EUROPÄISCHE PATENTSCHRIFT

(11) **EP 0 359 013 B1**
(45) Veröffentlichungstag und Bekanntmachung des Hinweises auf die Patenterteilung: **03.11.1993**
(21) Anmeldenummer: 89115784.4
(22) Anmeldetag: 26.08.1989
(51) Int. Cl.: B22D 17/22, B29C 45/42

(54) **Kunststoff-Spritzgiessmaschine**
Plastic injection moulding machine
Presse à mouler des matières plastiques par injection

(30) Priorität: 12.09.1988 DE 3830964
(43) Veröffentlichungstag der Anmeldung: 21.03.1990
(73) Patentinhaber: Hehl, Karl, 72290 Lossburg (DE)
(72) Erfinder: Hehl, Karl, 72290 Lossburg (DE)
(74) Vertreter: Mayer, Friedrich E.

(56) Entgegenhaltungen:
- EP-A- 0 218 101
- WO-A-88/03238
- DE-A- 2 160 989
- DE-A- 2 352 736
- DE-A- 3 432 262
- DE-A- 3 515 255

## Beschreibung

Die Erfindung betrifft eine Kunststoff-Spritzgießmaschine entsprechend dem Oberbegriff des Patentanspruches 1.

Bei einer bekannten Spritzgießmaschine dieser Art (DE-AS 23 52 736) ist die Entnahmeeinrichtung nur für ein bestimmtes Mehrfach-Spritzwerkzeug eingerichtet und nur für dieses benutzbar. Dabei werden die Spritzteile ausschließlich mittels eines Blaskanals quer zur Schließrichtung der Formschließeinheit der Spritzgießmaschine abtransportiert.

Es ist auch bekannt (EP 0 218 101 A1),bei einer Spritzgießmaschine die Spritzlinge-Entnahmeeinrichtung asymmetrisch und derart auszubilden, daß ein Greifer ausschließlich in der vertikalen Symmetrieebene der Spritzgießform verfahrbar ist.

Bekannt sind auch Entnahmevorrichtungen, deren linear verfahrbare Greifer ausschließlich parallel zur Trennebene der Spritzgießform, also quer zur Schließrichtung der Formschließeinheit bewegbar sind(DE 34 32 262 A1), oder deren linear verfahrbare Greifer ausschließlich in Schließrichtung der Formschließeinheit bewegbar sind.

Ferner sind Roboter bekannt, die nach vorgegebenem Programm in allen Richtungen des Raumes bewegbar sind (Firmenprospekt der Firma Reis, "Reis-Linear-Robot", 1984).

Der Erfindung liegt die Aufgabe zugrunde, einen Spritzgießmaschine der eingangs genannten Gattung derart weiterzubilden, daß die Spritzteile, insbesondere empfindliche optische Teile oder Spritzteile für Präzisionsgeräte aus beliebigen Spritzwerkzeugen mit sehr unterschiedlicher Verteilung bzw. Anordnung des Formhohlraumes bzw. der Formhohlräume gleichermaßen schnell und schonend entnommen, abgelegt und abtransportiert werden können.

Diese Aufgabe wird durch die im Anspruch 1 genannten Merkmale gelöst.

Bei einer solchen Ausbildung schafft die reihenweise Fixierung der Spritzteile die prinzipielle Voraussetzung dafür, daß Erschütterungen der Palette beim Abtransport bzw. bei der weiteren Behandlung der Paletten, z.B. beim Stapeln keine negativen Auswirkungen auf hochempfindliche Spritzteile haben können. Zudem ermöglicht es die Anordnung der Spritzteile in einem regulären Raumgitter der Palette, diese späterhin mittels Greifer nach Programm aus der Palette nacheinander, z.B. zwecks Verpackung oder zwecks weiterer Behandlung zu entnehmen.

Im übrigen sind die periodisch zu beschleunigenden bzw. abzubremsenden Massen der Entnahmeeinrichtung relativ gering, so daß bei relativ kurzen Transportwegen sehr hohe Arbeitsgeschwindigkeiten erzielbar und die Fixierpositionen zudem exakt ansteuerbar sind, wobei die raum- und wegsparende Anordnung der Palette innerhalb der Maschine wichtig ist. Verschiedentlich ist es auch erforderlich, Spritzteile mit eingegossenen Metallteilen (Einlegeteilen) z.B. Gewindebolzen herzustellen, welche Einlegeteile vor dem Einspritzen des Kunststoffes in die Formhohlräume einzulegen sind. In diesem Falle ist es möglich, einen Doppelgreifer (gemäß Anspruch 10) einzusetzen und bei Entnahme des Spritzteils aus dem Formhohlraum zugleich ein Einlegeteil für den nächsten Spritzling in den nunmehr leeren Formhohlraum einzulegen. Dies geschieht in der Weise, daß der Doppelgreifer mit einem ersten Greiforgan das fertige Spritzteil aus dem Formhohlraum entnimmt, geringfügig vom Formhohlraum wegfährt, sich um 180° dreht und sodann mit einem zweiten Greiforgan das Einlegeteil in den leeren Formhohlraum einlegt und danach das in dem ersten Greiforgan gehaltene Spritzteil zur Spritzteil-Aufnahmefläche der wenigstens teilweise mit Einlegeteilen belegten Palette transportiert. Dort wird das Spritzteil in Fixierposition abgelegt und vom Greiforgan des Doppelgreifers das nächste Einlegeteil aufgenommen, um dieses zu einem leeren Formhohlraum der Spritzgießform zu transportieren und so fort.

Nach Anspruch 6 liegen die prinzipiellen Voraussetzungen für ein wahlweises Ablegen der Spritzteile auf der die Spritzteile fixierenden Palette oder auf einem Förderband vor. Hierdurch kann sehr unterschiedlichen Erfordernissen bei der Entnahme und beim Abtransport hoch - empfindlicher oder weniger empfindlicher Spritzteile Rechnung getragen werden. Dank der Verfahrbarkeit der Greifereinrichtung in drei senkrecht zueinander stehenden Richtungen ist jede Fixierposition und jeder Formhohlraum rasch und exakt ansteuerbar. Die beidseitige Abstützung der Entnahmeeinrichtung auf dem Trägerbalken ermöglicht im übrigen eine statische Auslegung der Schlitten an einer unteren Festigkeitsgrenze, so daß beim Transport der Spritzlinge nur relativ geringe Massen zu bewegen sind.

Nachstehend wir die Erfindung anhand der Zeichnung erläutert.
Es zeigen:
- Fig. 1: Die Spritzgießmaschine in perspektivischer Darstellung,
- Fig. 2, 2a: die Werkzeugschließeinheit der Spritzgießmaschine mit der Entnahme- und Übergabevorrichtung in zwei Varianten,
- Fig. 3, 3a: die Varianten nach Fign. 2 und 2a in Stirnansicht,

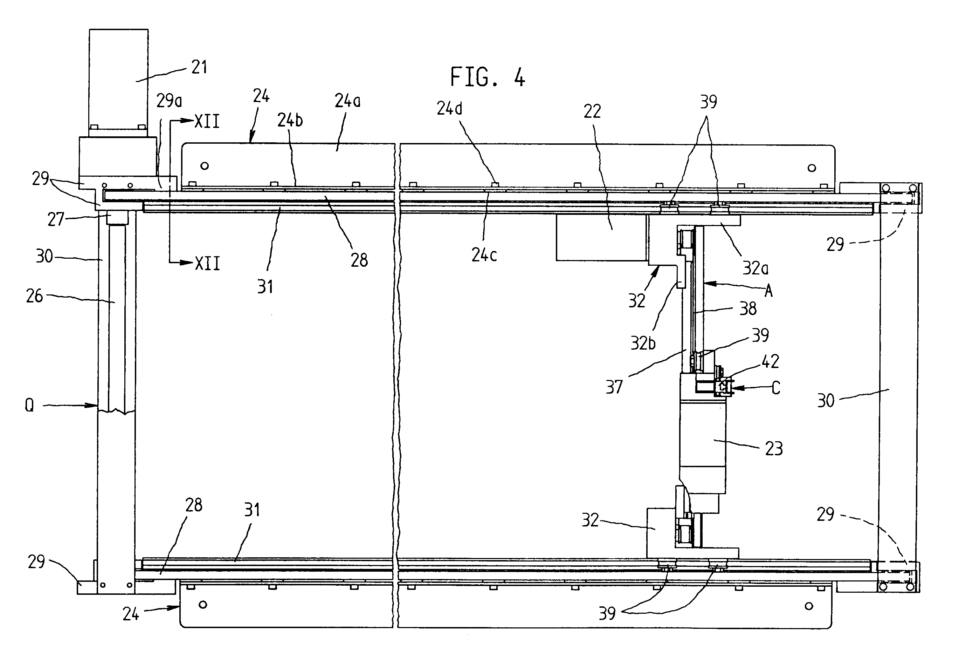

- Fig. 4: die Entnahmevorrichtung der Spritzgießmaschine in Draufsicht,
- Fig. 5: einen Ausschnitt aus Fig. 4 in vergrößerter Darstellung,
- Fig. 6, 6a: einen Ausschnitt aus der Entnahmevorrichtung im Schnitt nach Linie VI-VI von Fig. 7 (ohne Trägerbalken) und einen Doppelgreifer,
- Fig. 7: einen Ausschnitt aus der Entnahmevorrichtung im Bereich des zweiten und dritten Schlittens in Schließrichtung,
- Fig. 8: einen Ausschnitt aus Fig. 6 in vergrößerter Darstellung,
- Fig. 9, 10: einen Ausschnitt aus Fig. 7 in einander entgegengesetzten Ansichten in vergrößerter Darstellung,
- Fig. 11: die Antriebseinrichtung für den ersten Schlitten im Schnitt nach Linie XI-XI von Fig. 2,
- Fig. 12: einen Schnitt nach Linie XII-XII von Fig. 5,
- Fig. 13: eine schematische Darstellung der Anordnung der Schlitten und ihrer Antriebe,
- Fig. 14-16: eine Stapelpalette der Transporteinrichtung der Spritzgießmaschine in vergrößerter Darstellung aus unterschiedlichen Blickrichtungen,
- Fig. 17-19: je einen mehrere Stapelpaletten umfassenden Palettenstapel auf einer Transportpalette.

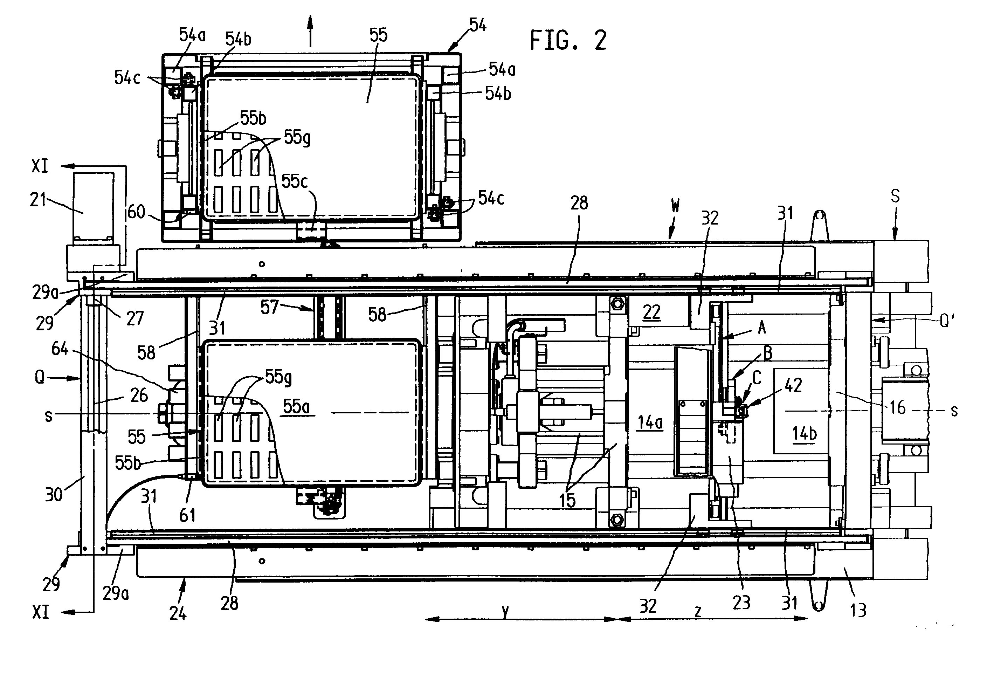

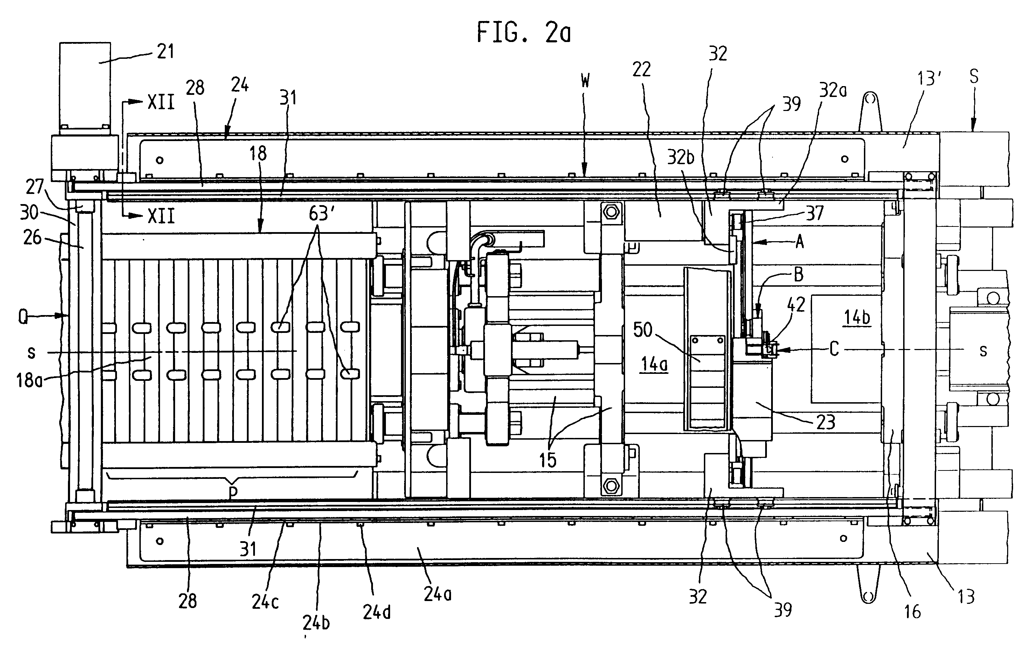

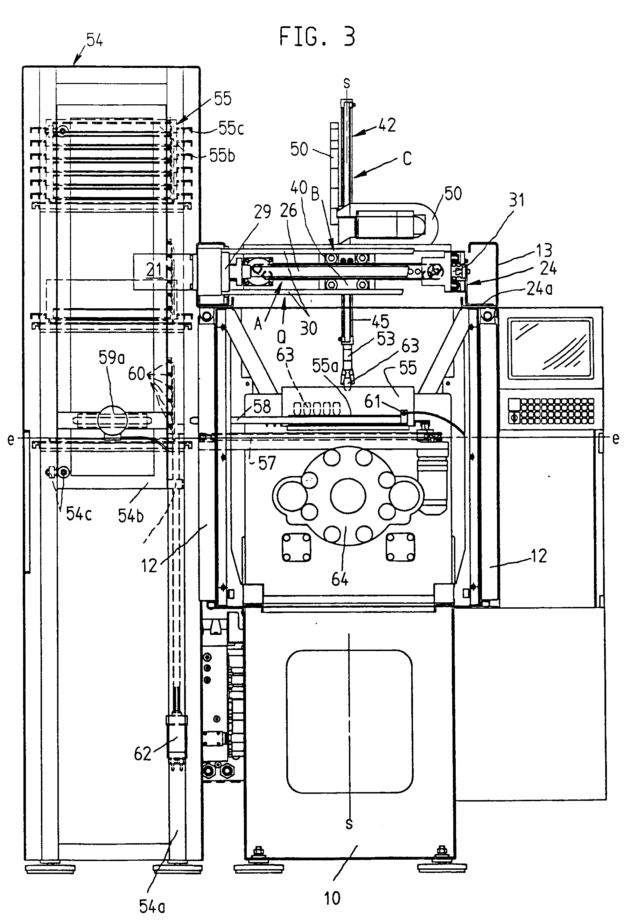

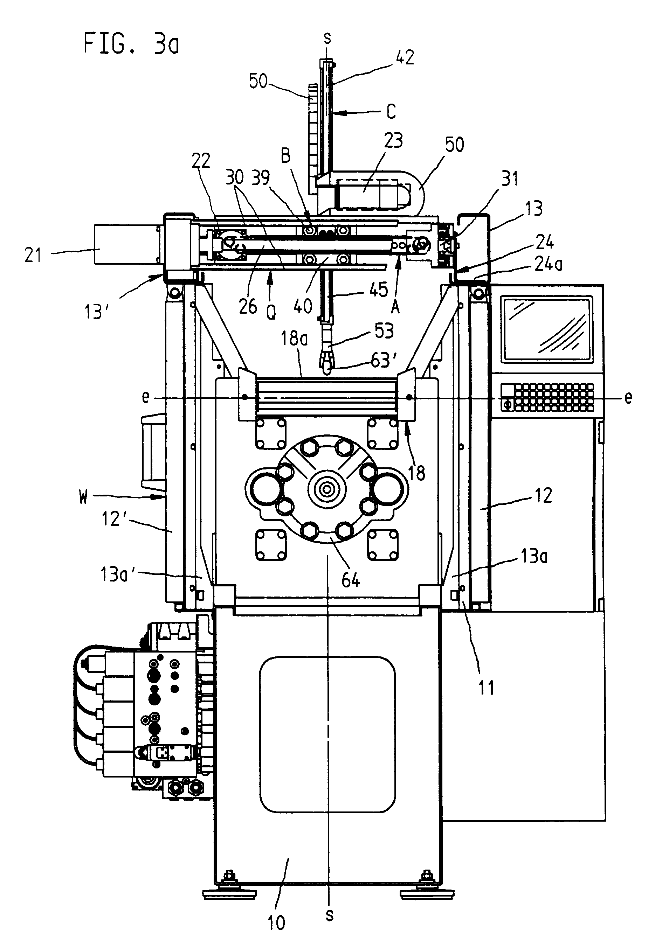

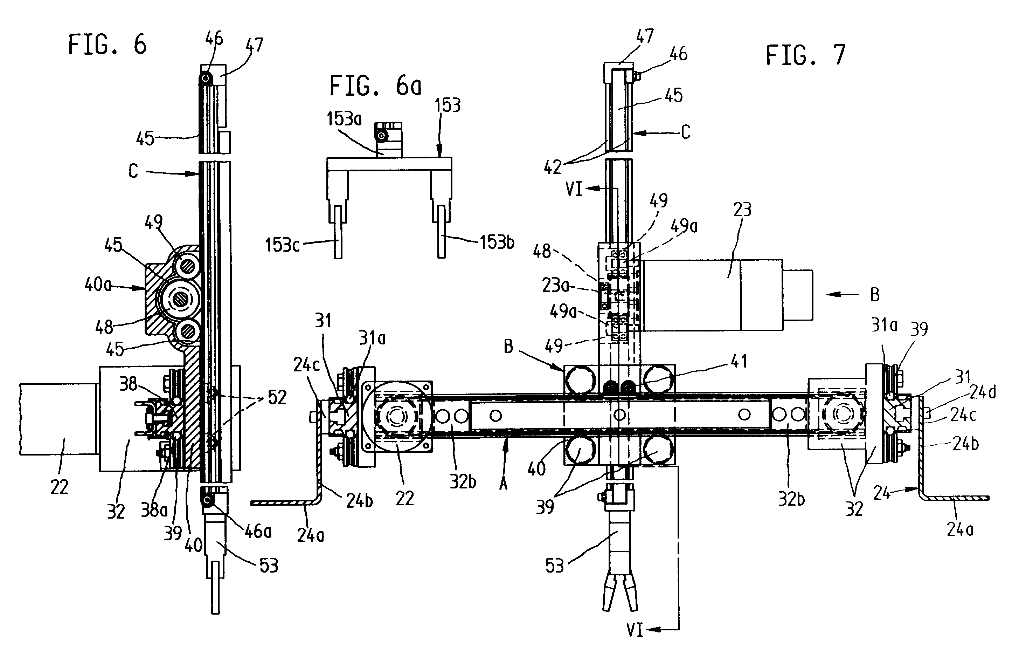

Die Spritzgießmaschine ist mit einer Entnahmeeinrichtung zur linearen Entnahme der Spritzgießteile 63 aus dem geöffneten Spritzwerkzeug 14a; 14b versehen. Die Spritzgießmaschine weist ferner eine Übergabeeinrichtung zur Übergabe der Spritzteile 63 für den Weitertransport auf, die eine Spritzteile-Aufnahmefläche 55a umfaßt, auf welcher die Spritzteile 63 in Fixierpositionen abgelegt werden können. Oberhalb der auf dem Maschinengestell 10 horizontal angeordneten Werkzeugschließeinheit W und Spritzgießeinheit S (Fig. 2, 2a) sind je zwei horizontale Trägerbalken 13, 13′ angeordnet. Die Trägerbalken liegen etwa symmetrisch zu einer vertikalen Symmetrieebene s-s der Spritzgießmaschine. Sie sind auf dem Maschinengestell 10 abgestützt. Ein Schlitten (erster Schlitten A) ist auf Schienen 31 der beiden Trägerbalken 13, 13′ motorisch bewegbar. Im zeichnerisch dargestellten Ausführungsbeispiel ist der erste Schlitten A auf den Schienen 31 etwa symmetrisch zur Symmetrieebene s-s aus einer Entnahmestation über der Trennfuge des Spritzwerkzeuges 14a, 14b mittels Laufrollen 39 in eine Übergabestation (Fig. 3, 3a) motorisch verfahrbar. In der Entnahmestation entnimmt die Entnahmeeinrichtung die Spritzlinge 63 aus der geöffneten Spritzgießform 14a, 14b mittels eines Greifers 53. In der Übergabestation legt der Greifer 53 die Spritzteile 63 auf die Spritzteile-Aufnahmefläche 55a einer Palette ab. Der erste Schlitten A ist als eine sich zwischen den beiden Trägerbalken 13, 13′ senkrecht zur Symmetrieebene s-s erstreckende Führungsschiene 38 ausgebildet. Die Schienen 31 für diesen ersten Schlitten A erstrecken sich über die Länge der Werkzeugschließeinheit W. Die Schienen 31 sind an vertikalen Schenkeln 24b von Winkelleisten 24 befestigt. Horizontale Schenkel 24a (Fig. 3,3a,7) der Winkelleisten 24 liegen auf Schenkeln der durch ein Blechprofil gebildeten Trägerbalken 13, 13′ auf. Die Trägerbalken 13, 13′ bilden mit Querverbindungen Q, Q′einen viereckigen Trägerrahmen. Dieser ist mittels vertikaler Trägerprofile 13a, 13a′ auf dem Maschinengestell 10 abgestützt. Die beiden miteinander identischen Querverbindungen Q, Q′ sind je aus zwei endständigen Flanschen 29 und zwei diametral an den Flanschen 29 angeordneten Querleisten 30 gebildet. Die als erster Schlitten A dienende Führungsschiene 38 führt einen nach Programm horizontal bewegbaren Schlitten (zweiter Schlitten B), der somit quer zum ersten Schlitten A verfahrbar ist.

Ein weiterer Schlitten (dritter Schlitten C) ist als Hubschiene 42 ausgebildet. Der dritte Schlitten C ist an Führungsrollen 52 eines Lagergehäuses 40a des zweiten Schlittens B vertikal führbar. Am unteren Ende der Hubschiene 42 ist der Greifer 53 zur Entnahme der Spritzteile aus dem Spritzwerkzeug 14a,14b angeordnet.

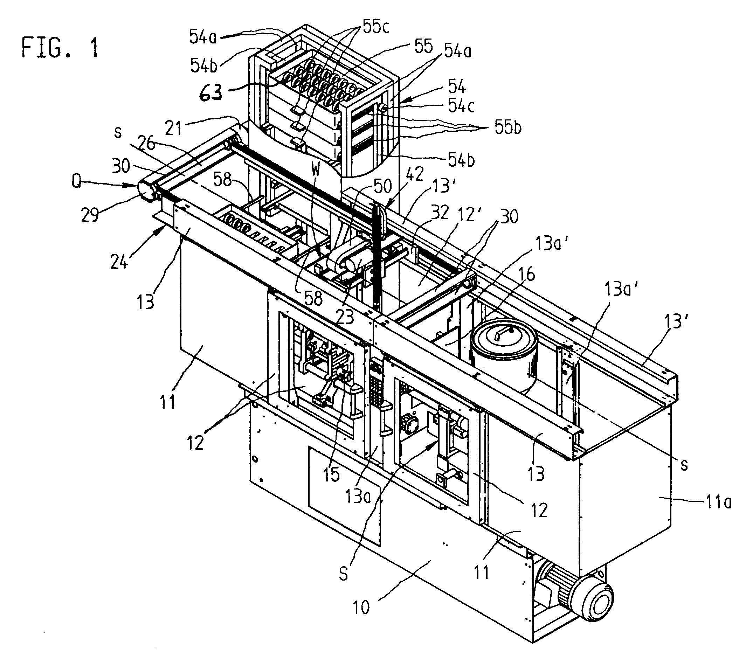

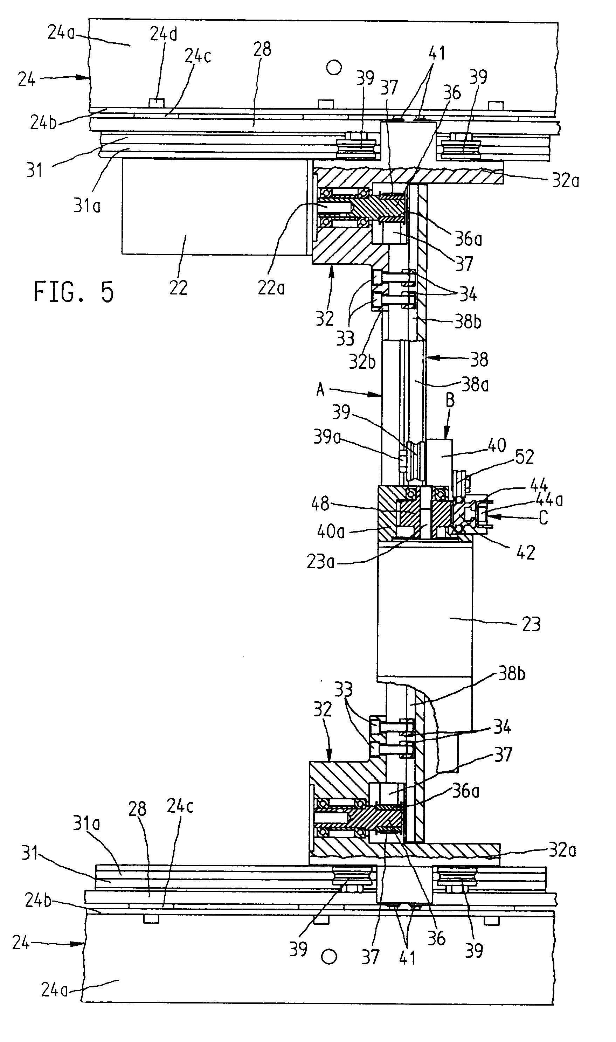

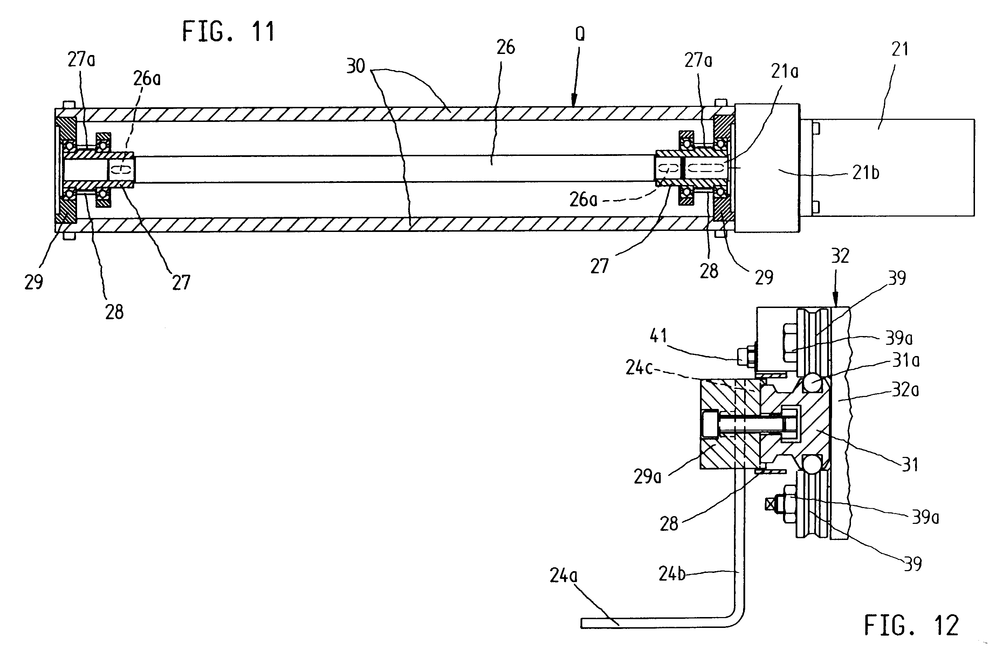

Im folgenden werden Aufbau und Anordnung der motorischen Antriebe und der Laufwerke der Schlitten A,B,C beschrieben. Die Führungsschiene 38 des Schlittens A ist beidends mittels Schraubenbolzen 33 an Lagerteilen 32 befestigt, welche je einen Flanschteil 32a für die Lagerung von Laufrollen 39 aufweisen. Wie insbesondere aus Figur 12 in Verbindung mit Figur 5 ersichtlich, sind ein oberes Laufrollenpaar auf einem oberen Rundprofil 31a der Schiene 31 und ein unteres Laufrollenpaar auf einem entsprechend angeordneten unteren Rundprofil 31a abrollbar. In dem Schlitten A ist die Antriebseinrichtung für den zweiten, auf der Führungsschiene 38 dieses Schlittens A verfahrbaren Schlittens B aufgenommen. Diese Antriebseinrichtung umfaßt zwei mit Verzahnung 36a versehene Antriebsräder 36 je für einen in der Länge einstellbare Zahnriemen 37, der den Schlitten B antreibt. In jedem Lagerteil 32 des Schlittens A ist ein Antriebsrad 36 gelagert, dessen Verzahnung mit dem Zahnriemen 37 kämmt. Ein Trumm des Zahnriemens 37 ist mit dem Lagergehäuse 40a des Schlittens B verbunden. Ein an dem einen Lagerteil 32 befestigter Motor 22 treibt über seine Antriebswelle 22a das antreibende Antriebsrad 36 des Schlittens B an. Mit 41 ist eine Spanneinrichtung für den Zahnriemen 37 bezeichnet. Die Antriebseinrichtung für den ersten Schlitten A ist in die stirnseitige Querverbindung Q integriert, welche sich zwischen den beiden Trägerbalken 13,13′ erstreckt. In endständigen Flanschen 29 der Querverbindung ist je ein Antriebsrad 27 mit Verzahnung 27a gelagert, wie insbesondere aus Figur 11 ersichtlich. Die beiden Antriebsräder 27 sind über eine Verbindungswelle 26 mittels Mitnehmer 26a drehfest verbunden. Ein Motor 21 mit Getriebeteil 21b ist koaxial am einen Flansch 29 befestigt und treibt über seine Antriebswelle 21a das zugehörige Antriebsrad 27 an. Die Verzahnungen 27a beider Antriebsräder 27 kämmen je mit einem Zahnriemen 28, der mit einem Trumm am benachbarten Lagerstück 32 angreift. Wie insbesondere aus Fig. 1 ersichtlich, ist die im Bereich des stationären Formträgers angeordnete andere Querverindung Q′ für die Trägerbalken 13, 13′ analog aufgebaut wie die stirnseitige Querverbindung Q, jedoch ohne Verbindungswelle.
Wie insbesondere aus Fig. 1 in Verbindung mit Fig. 12 erkennbar, ist die Querverbindung Q über Anformungen 29a der Flansche 29 an den Schienen 31 für den Schlitten A befestigt.

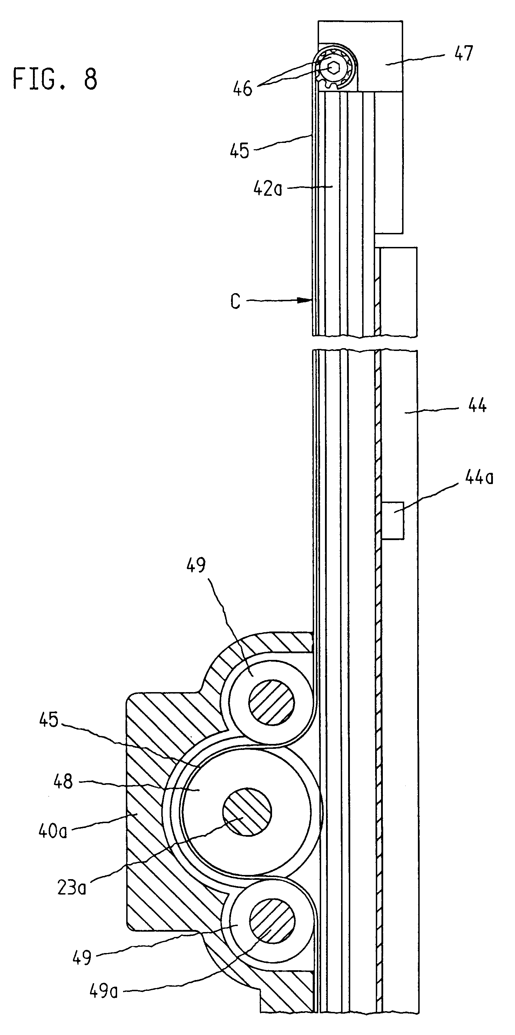

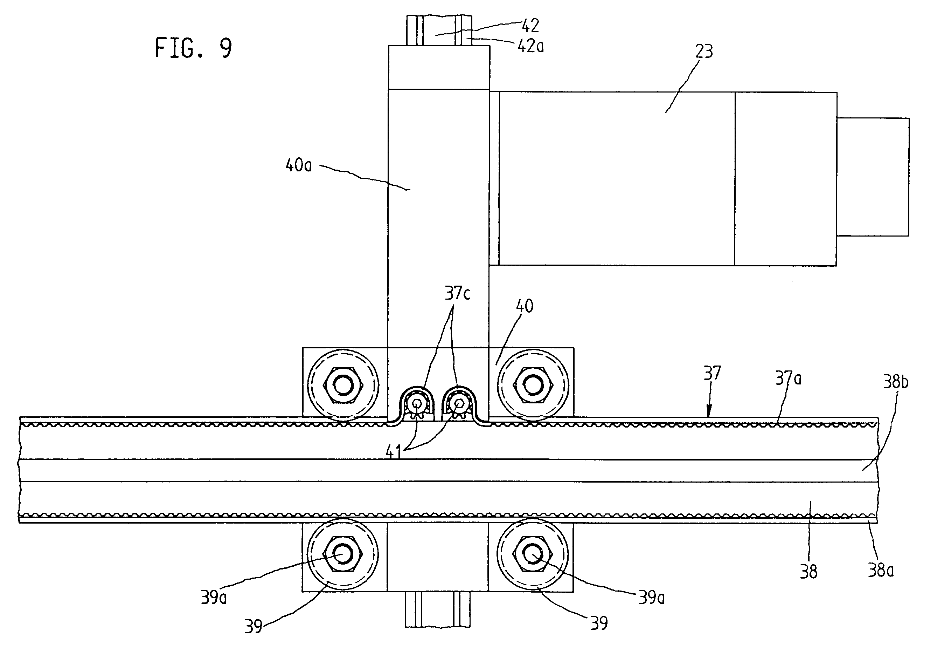

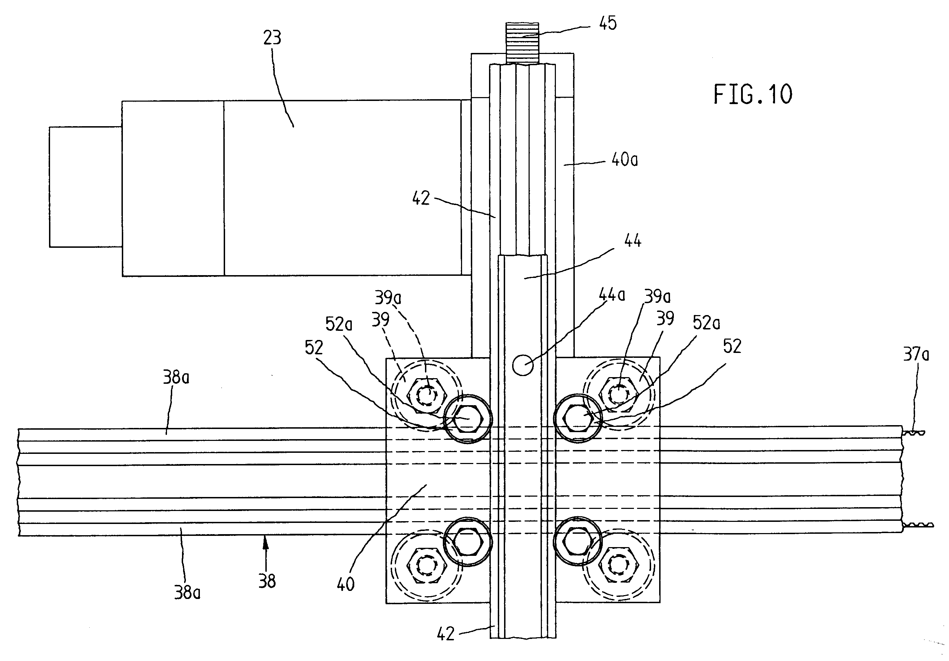

Der Schlittenkörper 40 des zweiten Schlittens B ist mittels Laufrollen 39 auf Rundprofilen 38a der Führungsschiene 38 des ersten Schlittens A abrollbar. Die Laufrollen 39 sind auf der dem Spritzwerkzeug 14a,14b zugewandten Seite am Schlittenkörper 40 mittels Befestigungsschrauben 39a drehbar gelagert (Fig. 9). Das antreibende obere Trumm 37a des Zahnriemens 37 greift über Spannenden 37c am Schlittenkörper 40 an, welche Spannenden 37c mittels Spannräder 41 mit dem Schlittenkörper 40 verbunden sind, wie insbesondere aus Fig. 9 ersichtlich. Der plattenförmige Schlittenkörper 40 ist oben zu einem Lagergehäuse erweitert, dessen seitliches Profil insbesondere aus Fig. 6 erkennbar ist. Ein auf der Motorwelle 23a des Antriebsmotors 23 sitzendes Antriebsrad 48 kämmt im Lagergehäuse 40a mit einem Zahnriemenabschnitt 45. Dieser ist mittels passiver Andrückrollen 49 im Eingriff mit der Verzahnung des Antriebsrades 48 gehalten, die auf Achsen 49a im Lagergehäuse 40a gelagert sind (Fig. 6). Eine als dritter Schlitten C dienende Hubschiene 42 ist an Führungsrollen 52 des Lagergehäuses 40a geführt. Die Hubschiene 42 ist mittels des Zahnriemenabschnittes 45 antreibbar. Dieser ist an seinen freien Enden über Spannschrauben 46,46a mit der Hubschiene 42 verbunden. Mit der im Lagerbock 47 angeordneten oberen Spannschraube 46 ist die Spannung des Zahnriemenabschnittes 45 einstellbar. Wie insbesondere aus den Fign. 5,10 erkennbar, ist die äußere Längsseite der Hubschiene 42 mit einer durch ein U-Profil gebildeten Versteifungsschiene 44 armiert. Die Versteifungsschiene 44 ist mit der Hubschiene 42 mittels Spannschraube 44a (Fig. 5,8,10) verbunden.

Mit 50 sind Energieschienen angesprochen, welche der Energieversorgung der Schlitten dienen.

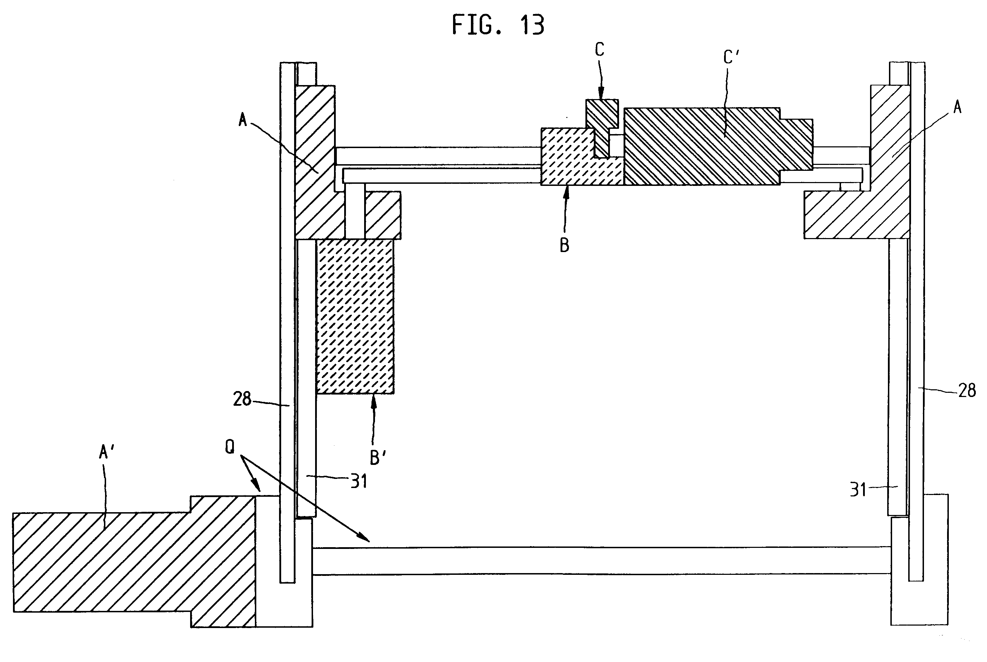

Das Schema gemäß Fig. 13 vermittelt einen Überblick über die gegenseitige räumliche Zuordnung der Schlitten A, B und C und deren Antriebsmotoren, die A′;B′;C′ bezeichnet sind.

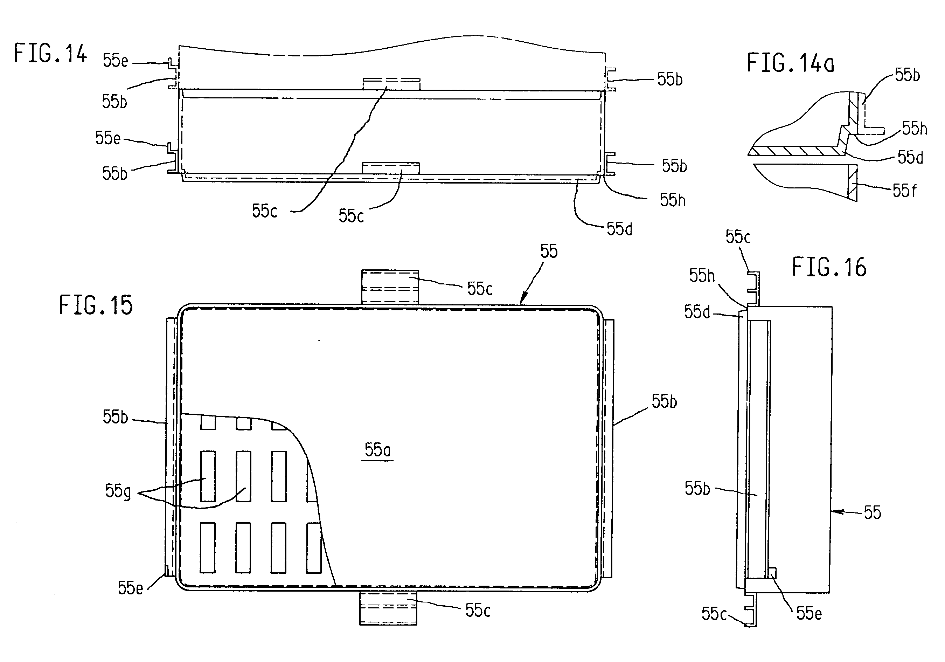

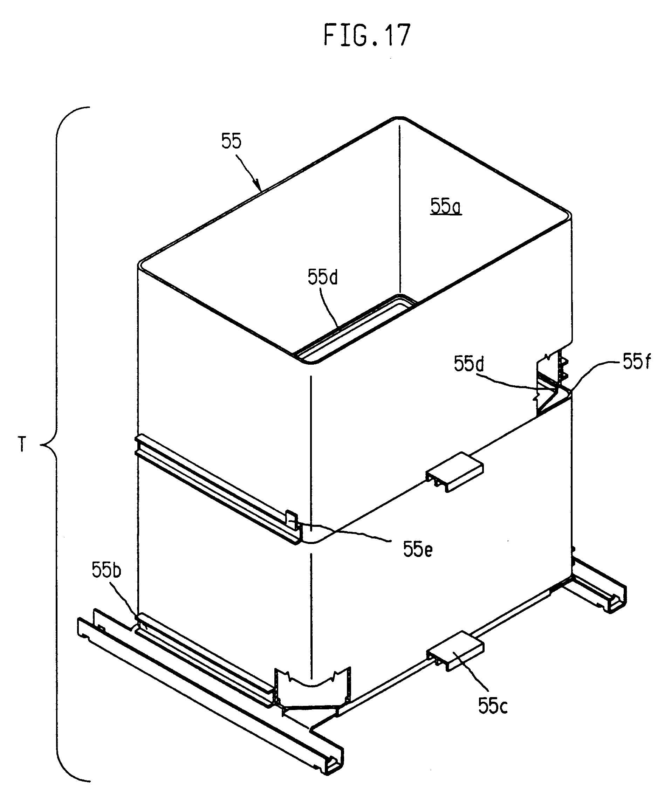

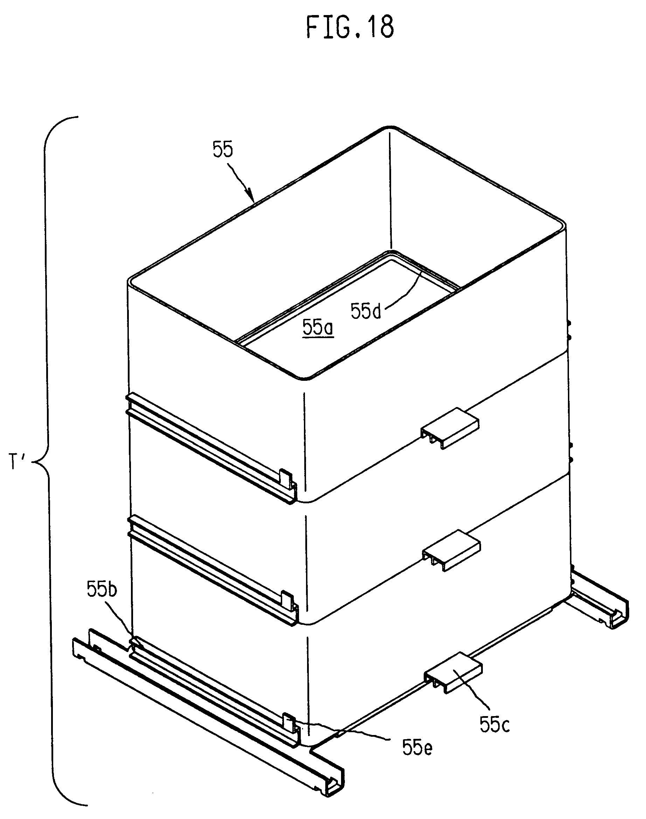

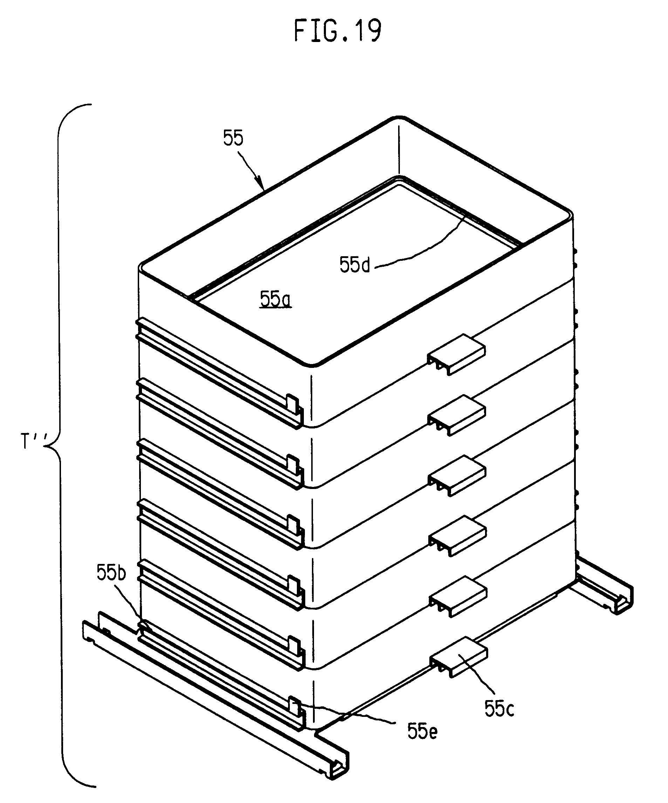

In Fign. 1-3 ist die Übergabeeinrichtung durch eine Stapelpalette 55 mit Spritzteile-Aufnahmefläche 55a gebildet. Auf der Stapelpalette 55 sind die Spritzteile 63 bei gesteuertem, stufenweisem Verfahren, z.B. des zweiten Schlittens B vom Greifer 53 reihenweise in Fixierpositionen, z.B. Aufnahmemulden 55g (Fig. 15), einfügbar. Anstelle von Aufnahmemulden 55g können auch andere Fixierorgane, z.B. reguläre Gitter aus Stäben vorgesehen sein, wobei die Spritzteile zwischen die Stäbe zur Fixierung teilweise eintauchen. Insbesondere bei Spritzteilen einfacher Gestalt, z.B. bei solchen, die im stabilen Gleichgewicht auf einer ebenen horizontalen Spritzteile-Aufnahmefläche abstellbar sind, ist es auch möglich, Fixierorgane zur bloßen Fixierung der ganzen Spritzteile-Reihe auf die Ränder der Palette zu beschränken. In diesem Falle werden die Spritzteile vom Greifer in der Reihe aneindandergefügt, die nach Vollendung als Ganzes von den randständigen Fixierorganen festgelegt ist. In Fig. 2 befindet sich eine als Stapelpalette 55 ausgebildete Palette in einem Abstand y (Fig. 2) von der Aufspannfläche des bewegbaren Spritzwerkzeugträgers 15, der etwa dem Abstand z zwischen den Aufspannflächen beider Spritzwerkzeug-Formträger 15, 16 bei geöffnetem Spritzwerkzeug 14a, 14b entspricht. Die Spritzteile-Aufnahmefläche 55a und die Oberkante des Spritzwerkzeuges 14a, 14b liegen etwa in einer gemeinsamen horizontalen Ebene e-e. Die mit Spritzteilen 63 belegte Stapelpalette 55 ist mittels übergreifender Führungsleisten 55b auf stationären Palettenführungen 58 der Spritzgießmaschine senkrecht zur Symmetrieebene s-s verschiebbar. Neben der Spritzteile-Aufnahmefläche 55a ist an der Rückseite der Spritzgießmaschine ein Palettenturm 54 zur Palettenstapelung mit einem der Spritzteile-Aufnahmefläche 55a entsprechenden Grundriß angeordnet, in den die gefüllten Paletten überführt und aus dem leere oder mit Einlegeteilen belegte Paletten entnommen werden. Der Palettenturm umfaßt ein aus einem Profilskelett 54a gebildetes stationäres Gestell. Ferner einen an säulenartigen, vertikalen Skelettelementen führbaren Fahrstuhl 54b. Der Fahrstuhl 54b ist mittels eines am Profilskelett 54a abgestützten Hubmotors 62 vertikal verfahrbar. Die je durch ein einziges Kunststofformstück gebildeten Stapelpaletten 55 sind mit einer ihren Boden umschließenden vertikalen Schutzwandung versehen. Die Grundfläche des Bodens ist kleiner als die Grundfläche der ganzen Stapelpalette 55. Der den Boden bildende Teil des Kunststofformstückes geht über einen zur Vertikalen geringfügig geneigten Zentrierbereich 55d in die vertikale Schutzwand über (Fig. 14a). Stapelpaletten 55 gleicher Schutzwandhöhe sind zu Stapeleinheiten T,T′, T˝ stapelbar (Fig. 17-19). Diese Stapeleinheiten weisen gleiche äußere Abmessungen auf. Je nach der jeweiligen Höhe der Schutzwände ihrer Stapelpaletten, umfassen die Stapeleinheiten eine unterschiedliche Anzahl von Stapelpaletten 55. Im Profilskelett 54b des Palettenturmes 54 sind eine Anzahl berührungslos arbeitender Signalgeber 60 zur Palettenerkennung angeordnet. Ihre Anzahl entspricht der in der Stapeleinheit T˝ größtmöglichen Palettenanzahl. Der gegenseitige Abstand der Signalgeber 60 entspricht einer Stapelpalette 55 geringster Höhe. Die Signalgeber 60 arbeiten mit Kodiernasen 55e der Stapelpaletten zusammen. Bei dieser Art der Anordnung ist für den Rechner erkennbar, wieviel Stapelpaletten 55 sich im Palettenturm befinden und ob es sich um eine Stapeleinheit gemäß der Fig. 17 bzw. 18 oder 19 handelt. Ebenso befindet sich an einer Schmalseite der Spritzteile-Aufnahmefläche 55a ein berührungslos arbeitender Signalgeber 61 zur Stapelpaletten-Erkennung.

Die Fixierung der abgelegten Spritzteile in entsprechenden Mulden 55g (Fig. 15) der Stapelpalette 55 ermöglicht eine nachfolgende automatische Entnahme nach Programm bei der weiteren 'Verarbeitung' der Spritzteile 63 mittels eines Greifers oder dergleichen. Im Bedarfsfalle kann der Greifer 53 durch einen Doppelgreifer 153, wie in Fig. 6a dargestellt, ersetzt werden. Dies ist vor allem bei der Herstellung von Spritzlingen mit metallenen Einlegeteilen erforderlich. Der Doppelgreifer 153 arbeitet dabei wie folgt: Bei der Entnahme eines Spritzteils aus dem Formhohlraum entnimmt ein Greiforgan 153b oder 153c das Spritzteil aus dem Formhohlraum.

Sodann fährt der Doppelgreifer 153 geringfügig vom Formhohlraum zurück, dreht sich um die Achse 153 um 180° und legt dann mit einem zweiten Greiforgan 153c oder 153b ein Einlegeteil in den leeren Formhohlräumen ein. Danach wird das im ersten Greiforgan 153b oder 153c gehaltene Spritzteil zur Spritzteil-Aufnahmefläche 55a transportiert. Dabei ist es möglich, die 'leeren' Stapelpaletten 55 bereits mit Einlegeteilen gefüllt, der Spritzgießmaschine zuzuführen, so daß der Doppelgreifer 153 vor dem Ablegen des Spritzteils in der Aufnahmemulde mit seinem leeren Greiforgan 153b oder 153c das Einlegeteil für die Herstellung des nächsten Spritzteils aus der Aufnahmemulde aufnehmen kann.

Für Spritzteile 63', die nicht so hoch empfindlich gegen Berührungskontakte sind, kann in die Spritzgießmaschine anstelle der Stapelpaletten 55 und des Palettentums 54 eine andere Übergabeeinrichtung in die Spritzgießmaschine eingefügt bzw. an diese angefügt werden, durch welche die Sprizteile parallel zur Symmetrieebene s-s aus dem Grundrißbereich herausgeführt werden. Bei dieser Übergabeeinrichtung ist die Spritzteile-Aufnahmefläche 18a durch die Förderfläche eines Förderbandes 18 gebildet (Fig. 2a,3a). Die so gebildete Spritzteile-Aufnahmefläche 18a ist innerhalb der Spritzgießmaschine so positioniert wie die Spritzteile-Aufnahmefläche 55a, die durch eine Stapelpalette gebildet ist, was sichinsbesondere aus einem Vergleich der Figur 3 mit der Figur 3a ergibt. Die Variante der Spritzgießmaschine gemäß den Figuren 1-3 ist ohne all zu großen Montageaufwand umwandelbar in die Variante gemäß den Figuren 2a,3a. Die Spritzgießmaschine kann bedarfsweise in beiden Varianten ausgeliefert werden. Der Kunde kann zu einem späteren Zeitpunkt nachrüsten oder umrüsten. Insofern kann mit der Spritzgießmaschine allen denkbaren Bedürfnissen der Praxis Rechnung getragen werden. Beide Übergabeeinrichtungen sind über der Antriebseinrichtung 64 für den bewegbaren Werkzeugträger 15 angeordnet.

Mit den Bezugszeichen 11,11a,12,12' werden stationäre und bewegliche Schutzabdeckungen bezeichnet. Wie aus Fig. 7 ersichtlich, sind die Schiene 31 und die Winkelleiste 24 mittels Befestigungsschrauben 24d unter Wahrung eines den Distanzstücken 24c entsprechenden Abstandes miteinander verbunden. An dem Befestigungsteil 32b des Lagerstücks 32 ist die Führungsschiene 38 mittels Befestigungsschrauben 33 verbunden, die mit ihren Nutensteinen 34 in einer Spannut 38b festgelegt sind. Mit 42a ist das Führungsprofil der vertikalen Hubschiene 42 bezeichnet, 52a bezeichnet die Lagerbolzen der Führungsrollen 52. Der Fahrstuhl 54b ist mittels Rollen 54c am stationären Gestell 54a des Palettenturms geführt. Beim Aufeinanderstapeln der Stapelpaletten kommt der obere Rand 55f der Stapelpalette 55 mit der horizontalen Kontaktfläche 55h der nächsten Stapelpalette 55 in Berührung. An einem Mitnehmer 55c der Stapelpaletten 55 können die Stapelpaletten aus dem und in den Palettenturm 54 mittels einer Kette 57 befördert werden.

## Patentansprüche

1. Kunststoff-Spritzgießmaschine, deren Werkzeugschließeinheit (W) eine an der Rückseite ihres bewegbaren Formträgers (15) angreifende und sich nach rückwärts erstreckende Antriebseinrichtung (64) aufweist,
mit einer Entnahmeeinrichtung zur linearen Entnahme der Spritzgießteile aus dem geöffneten Spritzwerkzeug (14a; 14b),
mit zwei oberhalb der Werkzeugschließeinheit (W) parallel und symmetrisch zu einer vertikalen Symmetrieebene (s-s) der Spritzgießmaschine auf dem Maschinengestell (10) abgestützten, horizontalen Trägerbalken (13; 13′),
mit einem auf Schienen (31) der Trägerbalken (13; 13′) aus einer Entnahmestation über der Trennfuge des Spritzwerkzeuges (14a; 14b) in eine Übergabestation (Fig. 3,3a) motorisch bewegbaren ersten Schlitten (A),
mit einem an diesem Schlitten (A) abgestützten dritten Schlitten (C), der einen in das geöffnete Spritzwerkzeug (14a; 14b) einfahrbaren Greifer (53) zur Entnahme der Spritzteile trägt,
sowie mit einer zwischen den Trägerbalken (13; 13′) angeordneten Übergabeeinrichtung zur Übergabe der Spritzteile (63) auf ein Transportmittel,
dadurch gekennzeichnet, daß sich die mit Querverbindungen (Q, Q′) versehenen Trägerbalken (13; 13′) über die Antriebseinrichtung (64 in Fig. 3, 3a) hinweg erstrecken und über dieser Antriebseinrichtung eine auf Palettenführungen (58) verschiebbare Palette angeordnet ist, deren Spritzteile-Aufnahmefläche (55a) für eine reihenweise Aufnahme der Spritzteile (63) in Fixierposition ausgebildet ist, und daß die Spritzteile (63) mittels eines am Schlitten (A) senkrecht zu dessen Bewegungsrichtung geführten Schlittens (zweiter Schlitten B) vom Greifer (53) in ihre Fixierpositionen einfügbar sind, wobei der erste Schlitten (A) über ein flexibles Element (Zahnriemen 28) von einem am Trägerbalken (13; 13′) angeordneten Motor (21 bzw. A′ in Fig. 13) antreibbar ist.

2. Kunststoff-Spritzgießmaschine nach Anspruch 1, dadurch gekennzeichnet, daß die Spritzteile-Aufnahmefläche (55a) der als Stapelpalette (55) ausgebildeten Palette mit Aufnahmemulden (55g in Fig. 15) zur Bildung der Fixierpositionen der Spritzteile (63) versehen ist.

3. Kunststoff-Spritzgießmaschine nach Anspruch 1 oder 2, dadurch gekennzeichnet, daß der auf Schienen (31) der durch Blechprofile gebildeten Trägerbalken (13; 13′) fahrbare erste Schlitten (A) als eine Führungsschiene (38) ausgebildet und auf dieser der zweite Schlitten (B) horizontal bewegbar ist, welcher den vertikal bewegbaren dritten Schlitten (C) trägt.

4. Kunststoff-Spritzgießmaschine nach Anspruch 3, dadurch gekennzeichnet, daß die Querverbindungen (Q; Q′) je aus endständigen Flanschen (29) und diametral an den Flanschen (29) angeordneten Querleisten (30) gebildet sind und daß in den Flanschen (29) der einen Querverbindung (Q) die den ersten Schlitten (A) antreibenden Antriebsräder (27) gelagert sind.

5. Kunststoff-Spritzgießmaschine nach einem der vorhergehenden Patentansprüche, dadurch gekennzeichnet, daß der dritte Schlitten (C) als Hubschiene (42) ausgebildet und diese an Führungsrollen (52) eines Lagergehäuses (40a)des zweiten Schlittens (B) geführt ist, wobei der erste und der zweite Schlitten mittels endloser Zahnriemen (28; 37) und der vertikal verfahrbare Schlitten (C) mittels eines Zahnriemen-Abschnittes (45) antreibbar sind, welcher mit einem im Lagergehäuse (40) des zweiten Schlittens gelagerten Antriebsrades (48) des Motors des dritten Schlittens kämmt.

6. Kunststoff-Spritzgießmaschine nach einem der Ansprüche 1-5, dadurch gekennzeichnet, daß in die Spritzgießmaschine alternativ die durch die Palette gebildete Übergabeeinrichtung oder eine durch ein Förderband (18) gebildete Übergabeeinrichtung einfügbar ist.

7. Kunststoff-Spritzgießmaschine nach Patentanspruch 6, dadurch gekennzeichnet, daß die Spritzteile-Aufnahmeflächen (18a; 55a) von Förderband (18) und Palette jeweils in einer Horizontalen Ebene (e-e in Fig.3, 3a) angeordnet sind, die etwa in Höhe der Oberkante des Spritzwerkzeuges (14a; 14b) liegt.

8. Kunststoff-Spritzgießmaschine nach einem der Ansprüche 2-7, dadurch gekennzeichnet, daß die durch ein einziges Kunststoff-Formstück gebildete Stapelpalette (55) eine ihren Boden umschließende vertikale Schutzwandung aufweist, wobei die Grundfläche des Bodens kleiner ist als die Grundfläche der ganzen Stapelpalette (55) und daß Stapelpaletten (55) gleicher Schutzwandhöhe zu Stapeleinheiten (T; T′; T˝) stapelbar sind, die gleiche äußere Abmessungen aufweisen, jedoch eine unterschiedliche Anzahl von Stapelpaletten umfassen (Fig. 14-19), wobei der Boden der Stapelpalette (55) über einen zur Vertikalen geneigten Zentrierbereich (55b) in die vertikale Schutzwand übergeht (Fig. 14a).

9. Kunststoff-Spritzgießmaschine nach einem der vorhergehenden Ansprüche, dadurch gekennzeichnet, daß an einer Schmalseite der im Grundriß rechteckigen Spritzteile-Aufnahmefläche (55a) der Palette zur Paletten-Erkennung ein berührungslos arbeitender Signalgeber (61) angeordnet ist.

10. Kunststoff-Spritzgießmaschine nach einem der vorhergehenden Patentansprüche, dadurch gekennzeichnet, daß eine Greifereinrichtung an einem horizontalen Steg befestigte Greifer (153b; 153c) aufweist, welcher Steg über eine vertikale Achse (153a) mit der Hubschiene (42) drehbar verbunden ist (Fig. 6a).

## Claims

1. Plastics injection moulding machine whose mould closing unit (W) has a drive means (64) engaging on the rear side of its movable mould carrier (15) and extending backwards, with a removal means for linear removal of the mouldings from the open injection mould (14a; 14b), with two support beams (13; 13') supported on the machine base (10) above the mould closing unit (W) parallel to and symmetrical with a vertical plane of symmetry (s-s) of the injection moulding machine, with a first carriage (A) movable by motor drive on rails (31) of the support beams (13; 13') out of a removal position above the parting line of the mould (14a; 14b) into a transfer position (Fig. 3, 3a), with, supported on this carriage (A), a third carriage (C) carrying a gripper (53) movable into the open injection mould (14a; 14b) for removal of the mouldings, and with a transfer means disposed between the support beams (13; 13') for transfer of the mouldings (63) on to a transport means, characterised in that the support beams (13; 13') provided with cross connections (Q, Q') extend above the drive means (64 in Figs. 3, 3a), and above this drive means is disposed a pallet movable on pallet guides (58), the moulding retaining surface (55a) of said pallet being designed to allow deposition of the mouldings (63) in rows in fixed locations, and in that the mouldings (63) may be deposited, by means of a carriage (second carriage B), guided on carriage (A) at right angles to the latter's direction of movement, by the gripper (53) in their fixed locations, the first carriage (A) being drivable via a flexible member (toothed belt 28) by a motor (21 or A' in Fig. 13) disposed on the support beam (13; 13').

2. Plastics injection moulding machine according to claim 1, characterized in that the moulding retaining surface (55a) of the pallet in the form of a stackable pallet (55a) is provided with retaining recesses (55g in Fig. 15) forming the fixed location for the mouldings (63).

3. Plastics injection moulding machine according to claim 1 or 2, characterized in that the first carriage (A) movable on rails (31) of the support beam (13; 13') formed by profiled sheet metal, is in the form of a track rod (38), and upon this the second carriage (B) is horizontally movable, and carries the vertically-movable third carriage (C).

4. Plastics injection moulding machine according to claim 3, characterized in that cross connections (Q, Q') are each formed by terminal flanges (29) and cross bars (30) diametrally disposed on the flanges (29), and in that the drive wheels (27) propelling the first carriage (A) are mounted in the flanges (29) of one cross connection (Q).

5. Plastics injection moulding machine according to one of the preceding Patent claims, characterised in that the third carriage (C) is in the form of a lifting bar (42), and is guided on guide rollers (52) of a bearing housing (40a) of the second carriage (B), the first and second carriages being drivable by means of endless toothed belts (28; 37), and the vertically-movable carriage (C) is drivable by means of a toothed belt portion (45) which meshes with a drive wheel (48) of the motor of the third carriage (C), mounted in the bearing housing (40) of the second carriage.

6. Plastics injection moulding machine according to one of claims 1 to 5, characterised in that the transfer means formed by the pallet, or a transfer means formed by a conveyor belt (18), are alternatively insertable into the injection moulding machine.

7. Plastics injection moulding machine according to Patent claim 6, characterised in that the moulding retaining surfaces (18a; 55a) of conveyor belt (18) and pallet are each disposed in a horizontal plane (e-e in Figs.3, 3a) which lies approximately level with the top edge of the injection mould (14a; 14b).

8. Plastics injection moulding machine according to one of claims 2 to 7, characterised in that the stackable pallet (55) formed from a single moulded plastics component, has a vertical guard wall surrounding its base, the area of the base being smaller than the area of the entire stackable pallet (55), and in that stackable pallets (55) having the same guard wall height may be stacked to form stacked units (T; T'; T'') which have the same external dimensions, yet include a differing number of pallets (Figs. 14-19), the base of the pallet (55) merging, via a centring region (55b) inclined to the vertical, into the vertical guard wall (Fig. 14a).

9. Plastics injection moulding machine according to one of the preceding claims, characterised in that a non-contacting sensor (61) is disposed on one narrow side of the moulding retaining surface (55a), which is rectangular in plan view, of the pallet, in order to recognise pallets.

10. Plastics injection moulding machine according to one of the preceding Patent claims, characterised in that a gripper means has grippers (153b; 153c) attached on a horizontal web, which is rotatably connected via a vertical axis (153a) to the lifting bar (42) (Fig. 6a).

## Revendications

1. Machine de moulage de matière plastique par injection dont l'unité de fermeture du moule (W) comporte un dispositif d'entraînement (64) qui vient en prise sur le côté arrière de son porte-moule mobile (15) et qui s'étend vers l'arrière,
comprenant un dispositif d'extraction destiné à retirer linéairement les pièces moulées par injection du moule d'injection (14a ; 14b) lorsque celui-ci est ouvert,
comprenant deux poutres porteuses horizontales (13; 13') qui s'appuient sur le bâti (10) de la machine, au-dessus de l'unité de fermeture du moule (W), parallèlement et symétriquement par rapport à un plan de symétrie vertical (s-s) de la machine de moulage par injection,
comprenant un premier chariot (A) qui peut être déplacé au moyen d'un moteur sur des rails (31) des poutres porteuses (13 ; 13') hors d'un poste d'extraction et jusque dans un poste de transfert (figures 3 et 3a), au-dessus du joint de séparation du moule d'injection (14a ; 14b),
comprenant un troisième chariot (C) qui s'appuie sur ce chariot (A) et qui porte une pince (53) destinée à retirer les pièces moulées par injection, cette pince pouvant être introduite dans le moule d'injection (14a ; 14b) lorsqu'il est ouvert,
et comprenant aussi un dispositif de transfert qui est disposé entre les poutres porteuses (13 ; 13') et qui est destiné à transférer les pièces moulées par injection (63) sur un moyen de transport,
caractérisée par le fait que les poutres porteuses (13 ; 13') munies de liaisons transversales (Q, Q') s'étendent au-dessus du dispositif d'entraînement (64 sur les figures 3 et 3a), et qu'au-dessus de ce dispositif d'entraînement est disposée une palette qui peut être déplacée sur des guidages de palettes (58) et dont la surface (55a) de réception des pièces moulées par injection est conformée de manière à recevoir les pièces moulées par injection (63) selon des rangées et en position fixe, et par le fait que les pièces moulées par injection (63) peuvent être insérées dans leur position fixe par la pince (53) au moyen d'un chariot (deuxième chariot B) qui est guidé sur le chariot (A) perpendiculairement à la direction de déplacement de celui-ci, cependant que le premier chariot (A) peut être entraîné par l'intermédiaire d'un élément flexible (courroie dentée 28) par un moteur (21, respectivement A' sur la figure 13) qui est disposé sur la poutre porteuse (13 ; 13').

2. Machine de moulage de matière plastique par injection selon la revendication 1, caractérisée par le fait que la surface (55a) de réception des pièces moulées par injection de la palette qui est réalisée sous la forme d'une palette empilable (55) est pourvue de cavités formant logements (55g sur la figure 15) destinées à former les positions fixes des pièces moulées par injection (63).

3. Machine de moulage de matière plastique par injection selon la revendication 1 ou 2, caractérisée par le fait que le premier chariot (A), lequel peut être déplacé sur des rails (31) des poutres porteuses (13 ; 13') qui sont constituées par des profilés en tôle, est réalisé sous la forme d'un rail de guidage (38), et que le deuxième chariot (B) peut être déplacé horizontalement sur celui-ci en portant le troisième chariot (C) qui peut être déplacé verticalement.

4. Machine de moulage de matière plastique par injection selon la revendication 3, caractérisée par le fait que les liaisons transversales (Q, Q') sont constituées chacune par des brides d'extrémité (29) et par des barres transversales (30) montées sur les brides (29) de manière diamétralement opposée, et par le fait que les roues d'entraînement (27) qui entraînent le premier chariot (A) sont montées dans les brides (29) de l'une (Q) des liaisons transversales.

5. Machine de moulage de matière plastique par injection selon l'une des revendications précédentes, caractérisée par le fait que le troisième chariot (C) est réalisé sous la forme d'un rail de levage (42), et que celui-ci est guidé sur des galets de guidage (52) d'un boîtier porte-paliers (40a) du deuxième chariot (B), cependant que les premier et deuxième chariots peuvent être entraînés au moyen de courroies dentées sans fin (28 ; 37), et que le chariot à déplacements verticaux (C) peut l'être au moyen d'un tronçon de courroie dentée (45) qui engrène avec une roue d'entraînement (48) du moteur du troisième chariot, celle-ci étant montée dans le boîtier porte-paliers (40) du deuxième chariot.

6. Machine de moulage de matière plastique par injection selon l'une des revendications 1 à 5, caractérisée par le fait que l'on peut introduire au choix dans la machine de moulage par injection le dispositif de transfert constitué par la palette ou un dispositif de transfert constitué par une bande transporteuse (18).

7. Machine de moulage de matière plastique par injection selon la revendication 6, caractérisée par le fait que les surfaces (18a ; 55a) de réception des pièces moulées par injection de la bande transporteuse (18) et de la palette sont chacune disposées dans un plan horizontal (e-e sur les figures 3 et 3a) qui est situé à peu près au niveau du bord supérieur du moule d'injection (14a ; 14b).

8. Machine de moulage de matière plastique par injection selon l'une des revendications 2 à 7, caractérisée par le fait que la palette empilable (55) constituée par une pièce unique en matière plastique comporte une paroi protectrice verticale qui entoure son fond, cependant que la surface de base du fond est plus petite que la surface de base de la totalité de la palette empilable (55), et par le fait que les palettes empilables (55) dont la paroi protectrice présente la même hauteur peuvent être empilées pour former des ensembles empilés (T ; T' ; T'') qui présentent les mêmes dimensions extérieures, mais qui comprennent un nombre différent de palettes empilables (figures 14 à 19), le fond de la palette empilable (55) se prolongeant par la paroi protectrice verticale par l'intermédiaire d'une zone de centrage (55b) qui est inclinée par rapport à la verticale (figure 14a).

9. Machine de moulage de matière plastique par injection selon l'une des revendications précédentes, caractérisée par le fait qu'en vue de détecter les palettes, un émetteur de signaux fonctionnant sans contact (61) est disposé sur un petit côté de la surface (55a) de réception des pièces moulées par injection de la palette, laquelle est rectangulaire en projection verticale.

10. Machine de moulage de matière plastique par injection selon l'une des revendications précédentes, caractérisée par le fait qu'un dispositif de préhension comporte une pince (153b ; 153c) qui est fixée à une barre horizontale, cette barre étant reliée au rail de levage (42) par l'intermédiaire d'un axe vertical (153a) (figure 6a), de manière libre en rotation.
